(19) Europäisches Patentamt
European Patent Office
Office européen des brevets

(11) EP 0 531 106 B1

(12) EUROPEAN PATENT SPECIFICATION

(45) Date of publication and mention of the grant of the patent:
**20.11.1996 Bulletin 1996/47**

(51) Int Cl.[6]: **G02B 5/20**, G02F 1/1335

(21) Application number: **92307954.5**

(22) Date of filing: **02.09.1992**

# (54) Colour filter for a colour liquid crystal display apparatus

Farbfilter für eine farbige flüssigkristalline Anzeigevorrichtung

Filtre couleur pour affichage à cristaux liquides en couleur

(84) Designated Contracting States:
**DE FR GB**

(30) Priority: **05.09.1991 JP 226150/91**

(43) Date of publication of application:
**10.03.1993 Bulletin 1993/10**

(73) Proprietors:
- **INTERNATIONAL BUSINESS MACHINES CORPORATION**
  **Armonk, N.Y. 10504 (US)**
- **FUJI PHOTO FILM CO., LTD.**
  **Kanagawa-ken (JP)**

(72) Inventors:
- **Fukunaga, Tetsuya**
  **Sagamihara-shi, Kanagawa-ken (JP)**
- **Koseki, Toshihiko**
  **Yokohama-shi, Kanagawa-ken (JP)**
- **Ueki, Toshihiro**
  **Kawasaki-shi, Kanagawa-ken (JP)**
- **Yamanaka, Hidemine**
  **Yamato-shi, Kanagawa-ken (JP)**
- **Kobayashi, Kesanao**
  **Haibara-gun, Shizuoka-ken (JP)**

(74) Representative: **Burt, Roger James, Dr.**
**IBM United Kingdom Limited**
**Intellectual Property Department**
**Hursley Park**
**Winchester Hampshire SO21 2JN (GB)**

(56) References cited:
**EP-A- 0 365 221**
**EP-A- 0 400 737**
**EP-A- 0 400 738**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 531 106 B1

## Description

The present invention relates to a colour filter for use in a colour liquid crystal display apparatus and to a method of manufacturing such a colour filter.

Known methods of manufacturing a colour filter used for a colour liquid crystal display apparatus can be divided into dyeing, dispersion, electrodeposition, printing, interference, etc. Except for the interference methods, the methods are roughly divided into the following two groups: one uses dye and the other uses pigment as an agent for colouring. It is considered that their mechanisms for colouring are similar to each other. However, these methods are very different from each other in that in the first group the dye is estimated to be dissolved in a fabricating process for a colour filter and to be present in the order of molecules in the colour filter, while in the second group the pigment disperses as particles of about 0.1μm since the pigment is not dissolved into the solvent.

EP 0,400,737 A1 discloses a method of making opaque grid lines for a colour filter array element. In one preferred embodiment where dyes are used in the process, a dye mordant is used to bond the dyes more strongly (see example 2 on page 6).

A colour filter including pigments has many advantages. However, some kinds of pigment used degrade the operation of polarisation of incident light. As a result, a problem that the display contrast ratio is reduced significantly is caused (see Ueki, Kozeki, Fukunaga, and Yamanaka, "A Color Filter for 512-Color Displaying 10.4" Sized TFT-LCD", Proceedings of the 7th Joint Conference on Color Technology, Color Engineering Conference Papers 5.2 on the Seventh International Symposium Associated Four Optical Societies, 1990). It is understood that such a problem originates in scattering, double birefregence, etc. However, it cannot yet be explained quantitatively. For the reason that a TFT-LCD requires higher contrast for display, it is urgent that such a significant problem should be solved. Up to the present, the depolarisation of light by means of a colour filter including dyes has been shown to occur. The stability of the dyes is low and it is difficult to find out the merits of the pigments other than that they result in the depolarisation of light. Therefore, if a colour filter including pigments the depolarisation of which is small can be developed, such a colour filter can be very advantageous to the contrast of a display.

The object of the present invention is to provide an improved colour filter for use in a colour liquid display and a method of manufacturing such a filter.

According to the invention there is provided a colour filter comprising a photochemically hardened composite containing an organic pigment, characterised by a light filtering substance comprising both the organic pigment and a substance obtained by the reaction of a binder polymer in the composite with a reactive dye.

According to the invention there is also provided a method of manufacturing a colour filter having a photochemically hardened composite containing an organic pigment, the method being characterised by the steps of: dissolving a binder polymer and a reactive dye to form a dye-dispersed composite; combining the dye-dispersed composite with the organic pigment to form a photosensitive composite; applying said photosensitive composite to a substrate; heating either said dye-dispersed composite or said photosensitive composite to bond said binder polymer with said reactive dye; and exposing said photosensitive composite to light to obtain said photochemically hardened composite.

In order that the invention may be more readily understood an embodiment will now be described with reference to the accompanying drawings, in which:

FIG. 1 shows a comparison of the spectrum of a colour filter fabricated by using new green as described herein with that of a colour filter fabricated by using CMR-green,

FIG. 2 shows a comparison of the chromaticity (x, y) of a colour filter fabricated by using new green as described herein with that of the colour filter fabricated by using CMR-green,

FIG. 3 shows a comparison of the spectrum of a colour filter fabricated by using new-red as described herein with that of a colour filter fabricated by using CMR-red,

FIG. 4 shows a comparison of the chromaticity (x, y) of a colour filter fabricated by using new-red as described herein with that of the colour filter fabricated by using CMR-red,

FIG. 5 shows a comparison of the contrast ratio of a colour filter fabricated by using pigment/reactive dye as described herein with that of a colour filter fabricated by using pigment.

FIG. 6 is a chemical formula of a material used in a colour filter described herein, and

FIG. 7 is a chemical formula of another material used in a colour filter described herein.

The present invention is based on the discovery that, if a reactive dye is added to a photosensitive composite for a colour filter containing a pigment and the reactive dye reacts with a binder polymer, which is a constituent of the photosensitive composite, to form a binder polymer-reactive dye bonding substance, a high contrast displayable colour filter can be obtained.

A composite of a photosensitive constituent for forming a pattern and colour material for colouring the pattern involves the problems of elution and fading in processes other than the first colouring, if the colour material is acid dye or disperse dye. Therefore, it is desirable to dissolve the reactive dye into the binder polymer to bond the reactive dye with the binder polymer by heating, and to use a substance thus obtained to form a colour filter.

The reaction of the reactive dye with the binder polymer is roughly divided, according to a kind of reactive dye, into one of the following three groups:

The first group is the reaction of a reactive dye containing a vinyl sulfone group as a reactive group with the binder polymer in which nucleophilic addition takes place. This reaction can be represented by the following chemical formula:

Colouring group-$SO_2CH{=}CH_2$+HO-binder residue

Colouring group-$SO_2$-$CH_2$-$CH_2$-O-binder residue

In the reaction, a reactive group on the side of the binder is a hydroxyl group (-OH) shown in the above chemical formula or an amino group ($-NH_3$). A reactive group on the side of the dye is the vinyl sulfone group shown in the above chemical formula, or a sulfatoethyl sulfonyl group ($-SO_2-CH_2CH_2-OSO_3H$) that changes into the vinyl sulfone group and the like.

The second group is the reaction of a reactive dye containing a nucleophilic substitution group as a reactive group with the binder polymer in which nucleophilic substitution takes place. These can be represented by the chemical formula 1 illustrated in Fig. 6.

In this reaction, a reactive group on the side of the binder is a hydroxyl group or an amino group the same as in the first reaction Reactive groups on the side of the reactive dye are nucleophilic substitution groups such as triazine series, pyrimidine series, quinoxaline series, phosphonic acid series, etc.

The third group is a reaction of the type of the above two mixed reactions types together or a reaction in which a plurality of reactive groups exist.

All reactions take place at a temperature of about 40°C to 60°C, can take place before the reactive dye and the binder polymer are applied, or can take place in prebaking after a resist is applied.

The reaction of the dye with the binder forms the covalent bond of these materials. Thereby, the dye is not dissolved in succeeding processes after the first colouring and thus the colour filter can be formed.

To the photosensitive composite used as a base of the colour filter, the addition of a photopolymerised composite comprising a polymerisation unsaturated monomer, a photopolymerisation initiator, and a binder, which are disclosed by US -A- 3,549,367 and others, is useful. A detailed discussion on this additional composite follows.

The additional polymerisation unsaturated monomer is a compound which contains at least one ethylene unsaturated group that can be polymerised by an addition polymerisation process and the boiling point of which is above 100 C at the ordinary pressure. Examples of such a monomer are monofunctional acrylate or methacrylate such as polyethylene glycol mono acrylate (or methacrylate), polypropylene glycol mono acrylate (or methacrylate), or phenoxyethyl acrylate (or methacrylate), etc.; an acrylate (or methacrylate) substance obtained after the addition of ethylene oxide or propylene oxide to polyfunctional alcohol such as polyethylene glycol di acrylate (or methacrylate), trimethylolethane tri acrylate (or methacrylate), neopenthy glycol acrylate (or methacrylate), pentaerythritol tri acrylate (or methacrylate), pentaerythritol tetra acrylate (or methacrylate), dipentaerythritol hexa acrylate (or methacrylate), hexanediol acrylate (or methacrylate), trimethylolpropane tri (acryloil oxypropyl) ether, tri (acryloiloxyethyl) isocyanelate, glycerin, or trimethylolethane, etc.

Other examples are urethane acrylate, etc. as described in JP-A- 48-41708, JP -A- 50-6034, and JP -A- 51-37193;

Further examples are polyester acrylate, etc. as described in JP -A- 48-64183, JP -A- 49-43191, and JP -A- 52-30490;

Still further examples are polyfunctional acrylate or methacrylate such as epoxy acrylate, etc. obtained by the reaction of epoxy resin with acrylic (or methacrylate) acid.

In addition to the above, substances introduced as a light hardening monomer and an oligomer as described in the Journal Vol. 20, p. 300 to 308 of Japan Adhesion Association can be also used. The quantity of the monomer or the oligomer to be used is 5 to 50% weight, and 10 to 40% weight is preferred.

The additional photopolymerisation initiator can be, for example, a bicynal polyketoaldonyl compound as disclosed in US -A- 2,367,660, an α-carbonyl compound as disclosed by US -A- 2,367,661 and US -A- 2,367,670, acyloin ether as disclosed in US -A- 2,448,828, an aromatic acyloin compound substituted by α-hydrocarbon as disclosed in US -A-2,722,512, a multi-nuclear quinone compound as disclosed in US -A- 3,046,127 and US -A- 2,951,758, a combination of triaryl imidazole dimer and p-aminophenyl ketone as disclosed in US -A- 3,549,367, a benzothiazole series compound/ trihalomethyl-s-triazine series compound as disclosed in JP -A- 51-48516, a photosensitive-s-triazine compound as disclosed in JP -A- 61-186238, a trihalomethyl-s-triazine series compound as disclosed in US 4,239,850 or an oxadiazol compound as disclosed in US -A- 4,212,976. The quantity of the initiator to be used is approximately 0.2 to 20% weight of solid content, and 0.5 to 15% weight is the preferred range.

The binder polymer may include a linear organic macromolecule polymer the side chains of which contain functional groups, for example, hydroxyl groups, amino groups, or amide groups required for adding the reactive dye and which is dissolved into a monomer, for example, hydroxyethyl acrylate, aminoethyl acrylate, or acrylamide homopolymer or copolymer; or a compound of acid anhydride and glycol or aminoglycol in which ester is locally formed, for example, maleic anhydride copolymer and anhydrous itaconic acid copolymer. It is preferable that the polymer can be dissolved into an organic solution and developed by a weak alkaline solution. More specifically, when a polymer the side chain of which has carboxylic acid, for example, a methacrylic acid copolymer, an acrylic acid copolymer, and a crotonic acid copolymer, etc, which are disclosed in, for example, Japanese Patent Unexamined Published Application (PUPA) No. 59-44615, JP -A- 54-34327, JP -A- 58-12577, and JP -A- 54-25957, and

Japanese PUPAs Nos. 59-53836 and 59-71048 is synthesised, it is possible to make the binder polymer soluble into the alkaline solution by the copolymerisation of hydroxyethyl acrylate, amino ethyl acrylate, or acryl amide, etc. as the reactive group of the dye, the partial esterification of acid anhydride such as maleic anhydride copolymer or anhydrous itaconic acid copolymer and glycol or amino glycol, or the addition of anhydride such as itaconic acid, maleic acid, phthalic acid, or hydrous phthalic acid, etc. to the homopolymer or copolymer of hydroxyethyl acrylate, amino ethyl acrylate, or acryl amide. Similarly, an acidic cellulose derivative, etc., the side chain of which contains carboxylic acids, can be used.

Particularly, benzyl acrylate (or methacrylate) / hydroxyethyl acrylate (or methacrylate) / acrylic (or methacrylate) acid copolymer and styrene / hydroxyethy acrylate (or methacrylate) / acrylic (or methacrylate) acid copolymer are preferred. In addition, as a soluble polymer, poly (vinyl pyrrolidone), polyethylene oxide, and poly (vinyl alcohol), etc. are useful. Further, to increase the intensity of a hardened film coating, the addition of nylon soluble in alcohol or polyether formed from 2.2-bis (4-hydroxy phenyl)-propane and epichlorhydrin can be used. These polymers may be formed by mixtures in any quantities, but it is not preferable, in respect of the deterioration in the quality of picture images to be produced, that over 90% polymers are formed. The 30 to 85% range are ideal for the polymers.

In addition to the above, the addition of an inhibitor for thermal polymerization is preferred. For example, hydroquinone, p-methoxyphenol, di-t-butyl-p-cresol, pyrogallol, t-butylcatechol, benzoquinone, 4.4′-thiobis (3-methyl-6-t-butylphenol), 2.2′-methylene (4-methyl-6-t-butylphenol), and 2-mercapto benzo imidazole, etc. can be used. Suitable monomers usually contain a proper quantity of an inhibitor for thermal polymerization.

For pigments to be added to the photosensitive composites, the pigments of, for example, azo compounds, anthraquinone, xanthine, quinacridone, indigo, dioxazine, indanthrone, isoindolinone series can be used. For example, phthalocyanines blue (C.I. pigment blue 15:3, for example, Rionol blue-ES manufactured by Toyo Ink Mfg. Co.Ltd., Chromo blue-A3R manufactured by CIBA), phtalocyanine green (C.I. pigment green 7.36 or C.I pigment green 37, for example, Rionol green 2YS manufactured by Toyo Ink Mfg. Co.Ltd.), berylene pigment (C.I. pigment red 155), and anthraquinone pigment (C.I. pigment red 177, for example, Rionogen red CD manufactured by Toyo Ink Mfg. Co.Ltd., Chromo PHTAL red BRN manufactured by CIBA), etc. can be used. Further, for colour correction, it is preferred that C.I. pigment yellow 83, C.I. pigment yellow 154, (for example, Rionogen yellow 3G manufactured by Toyo Ink Mfg. Co. Ltd.), and G.I. pigment violet 23 (for example, Rionogen violet RL manufactured by Toyo Ink Mfg. Co.Ltd.), etc. be used. Such pigments disperse into the light-hardened photosensitive composites so that colouring photosensitive composites can be formed. The percentage of each of the pigments occupying a photosensitive layer is 5 to 90% in the ratio of a solid and 10 to 60% the more preferred range.

Each of the photosensitive composites is diluted with a solvent so that the concentration of the solution becomes 3 to 70% or, in a preferred mode, 5 to 50%, and then is applied, by any known method, to a transparent substrate such as a glass or a plastic substrate so that a dry film of 0.5 to 5 μm thickness is formed.

For the solvent, the glycol ether series, that is methyl cellosolve, ethyl cellosolve, propyl cellosolve, propylene glycol methyl ether, propylene plycol ethyl ether, propylene glycol propyl ether, can be used, and the acetate series, that is methyl cellosolve acetate, ethyl cellosolve acetate, propyl cellosolve acetate, propylene glycol methyl ether acetate, propylene glycol ethyl ether acetate, and propylene glycol propyl ether acetate, can be used. For the acetate ester series, amyl acetate, butyl acetate, propyl acetate, and ethyl acetate can be used. For the ketone series, methyl isobutyl ketone, methyl ethyl ketone, acetone, cyclohexanone and in addition to above, dimethylformamide, dimethyl sulfoxide, methyl pyrrolidone, γ-butyrolactone, and lactic acid ethyl etc. can be used and their alkyl groups may be an isomer with a normal or a branched chain.

A fluorescent brightening agent for making colours brighter or the detergent of fluorine series as coating improvers may be added.

A colour filter formed as described above has at least one colouring layer made from a photosensitive composite containing a substance obtained by the reaction of the binder polymer with the reactive dye. In a preferred embodiment, the colour filter has a permeable colouring layer, which transmits red, blue, and green light and is formed on a transparent substrate, made by a photosensitive composite containing a substance made by the reaction of the binder polymer with the reactive dye, and pigment. In this case, it is preferable that the permeable colouring layer is formed between black matrix on the transparent substrate.

Specifically, the black matrix is formed as follows. First, a layer of photosensitive composite, including a black pigment of carbon black or black pigment which is a mixture of the pigment of red, blue, violet, and yellow, is deposited on a transparent substrate such as glass and then patterns are exposed to light by the usual masking process. By subsequent development the black matrix, that is a light shielding layer, is formed. The light shielding layer may alternatively be formed by depositing a chromium layer on the transparent substrate, depositing a photoresist, exposing a pattern by the usual masking process, and finally developing the photoresist to remove the photoresist.

The photosensitive permeable colouring layers of red, blue, and green are formed as follows.

First, a photosensitive permeable colouring layer of the first colour, for example red, of the three colours is deposited on the entire surface of the transparent substrate on which the above light shielding layer is formed, and then a poly vinyl alcohol (PVA) layer is deposited on the permeable colouring layer. The PVA layer functions to block the colouring layer from oxygen. If there is no PVA layer, the colouring layer is exposed to oxygen in the process of the exposure to light and a photochemical reaction, that is the hardening process, does not take place.

Then a mask, which has an aperture corresponding to a required red colour filter, is overlaid and an exposing process takes place from the side of the mask. As a result the part of the colouring layer of red exposed to light hardens. The PVA layer and the remaining part of the colouring layer of red not exposed to light are the removed in a developing process. The colouring layer of red is then hardened completely in a baking process at a temperature of 180 C to 250 C.

Second, the photosensitive permeable colouring layer of the second colour, for example green, of the three colours is deposited on the entire surface of the transparent substrate on which the above red colouring layer is formed. The PVA layer is then deposited on the second permeable colouring layer. Then a mask, which has an aperture corresponding to a required green colour filter, is overlaid and an exposing process takes place from the side of the mask. As a result the part of the colouring layer of green exposed to light hardens. The PVA layer and the remaining part of the colouring layer of green not exposed to light are then removed in the developing process and the colouring layer of green is then hardened completely in a baking process as described above.

Finally, the final photosensitive permeable colouring layer of, for example blue, of the three colours is deposited on the entire surface of the transparent substrate on which the above red and green colouring layers have been formed and the PVA layer is deposited on the final colouring layer. Then a mask, which has an aperture corresponding to a blue colour filter, is overlaid and the exposing process takes place from the side of the mask. As a result the part of the colouring layer of blue exposed to light hardens. The PVA layer and the remaining part of the colouring layer of blue not exposed to light are then removed in the developing process and the colouring layer of blue is hardened completely in a baking process as described above.

The thickness of the transparent glass substrate ranges from 0.7mm to 1.1mm. A thickness of 1.1mm is preferred. The thickness of the photosensitive permeable colouring layer ranges from 0.5 µm to 3 µm. A thickness of 2 µm is preferred. If the thickness of the colouring layer is less than 0.5 µm, light passes excessively through the colouring layer and the colour filter therefore does not fulfil its function. On the other hand, if the thickness of the colouring layer becomes greater than 3 µm, light does not pass through the colouring layer at all and hardening in the exposing process will be insufficient. Side etch will occur in the developing process and desired patterns will not become obtained.

Common electrodes of indium or tin oxide (ITO) are deposited on the entire surface of the transparent substrate on which the red, the green, and the blue colour filters are formed and a rubbing layer of polyimide is deposited over the ITO. Beneath the ITO, a protective layer made of acryl, urethane, epoxy, or polyimide, etc. can be attached. It is well known that indium or tin oxide (ITO) is used as a layer of the electrodes attached to the transparent substrate. It is preferable that an ITO film of a desired thickness, for example, scores or thousands of angstrom units (Å) is formed in sputtering and the common electrodes are formed in a required pattern by a well-known method, if necessary.

A colour filter as described above is most suitable for a TFT-LCD unit which needs an especially high-contrast display and has the capability of gray scale display and can be discriminated remarkably against a conventional colour filter as gray scale proceeds in the future. The red colour filter described contains the organic pigment of primary red and the reactive dye of primary yellow and the green colour filter contains the organic pigment of primary green and the reactive dye of primary yellow. It is preferred that the organic pigment of primary red is dianthraquinone, the organic pigment of primary green is halo-Cu-phthalocyanine, and the reactive dye of primary yellow is a monoazo compound. Those red and green filters are small in the degree of depolarisation and therefore make high contrast displaying possible.

More specific examples will now be described.

Embodiment 1

First, to obtain conventional predetermined spectra, the compositions of the following three kinds of dye-dispersed photopolymers/pigment-dispersed photopolymers were adjusted, through colour matching simulation, so that a colour filter of the same chromaticity and transmittance as those of "colour-matched green resist (pigment of green-pigment of yellow)" (hereinafter called CMR-green) and "colour-matched red resist (pigment of red-pigment of yellow)" (hereinafter called CMR-red), which are currently in use, can be formed. The photopolymers and the examples of their adjustment are as follows.

| Pigment-dispersed photopolymer (Primary red) | |
|---|---|
| Dianthraquinone (Red pigment) | 20g |
| Benzyl methacrylate / Hydroxyethyl methacrylate / Methacrylic acid copolymer (Binder polymer) | |
| [Molar fraction 70/30, Average molecular weight εw 20,000] | 60g |
| Pentaerythritol tetracrylate (Monomer) | 33g |
| Initiator for photopolymerisation shown by the following chemical formula 2 in FIG. 7 | 2g |
| Methoxy phenol (Inhibitor for thermal polymerization) | 16mg |
| Cellosolve acetate | 550g |

| Pigment-dispersed photopolymer (Primary green) | |
|---|---|
| Halo-Cu-phthalocyanine | 20g |
| Benzyl methacrylate / Hydroxyethel methacrylate / Methacrylic acid copolymer (Binder polymer) | |
| [Molar fraction 70/30, Average molecular weight εw 20,000] | 60g |
| Pentaerythritol tetracrylate (Monomer) | 33g |
| Initiator for photopolymerization shown by the chemical formula 2 in FIG. 7 | 2g |
| Methoxy phenol (Inhibitor for thermal polymerization) | 16mg |
| Cellosolve acetate | 550g |

| Dye-dispersed photopolymer (Primary yellow) | |
|---|---|
| Monoazo compound (reactive yellow dye) | 20g |
| Benzyl methacrylate/Methacryl acid copolymer (Binder polymer) | |
| [Molar fraction 70/30, Average molecular weight εw 20,000] | 62g |
| Trimethylolpropane triacrylate (Monomer) | 38g |
| Initiator for photopolymerization shown by the chemical formula 2 in FIG. 7 | 2g |
| Cellosolve acetate | 650g |
| Primary yellow is mixed with and dissolved into a solution, and the mixture is filtrated. The reactive yellow dye used is Sumifix Yellow R(C.I. Reactive Yellow 77) manufactured by Sumitomo Chemical Co. Ltd. | |

| Dye/pigment dispersed photopolymer (New red) | |
|---|---|
| Primary red | 40g |
| Primary yellow | 60g |

| Dye/pigment dispersed photopolymer (New green) | |
|---|---|
| Primary green | 60g |
| Primary yellow | 40g |

| CMR-red | |
|---|---|
| Isoindolin | 2g |
| Dianthraquinone | 1.8g |
| Benzyl methacrylate/Methacryl acid copolymer (Binder polymer) [Molar fraction 70/30, Average molecular weight εw 20,000] | 60g |
| Penthaerythritol tetracrylate (Monomer) | 33g |
| Initiator for photopolymerization shown by the chemical formula 2 in FIG. 7 | 2g |
| Methoxy phenol (Inhibitor for thermal photopolymerization) | 16mg |
| Cellosolve acetate | 550g |

| CMR-green | |
|---|---|
| Isoindolin | 3g |
| Halo-Cu-phthalocyanine | 17g |
| Benzyl methacrylate/Methacryl acid copolymer (Binder polymer) [Molar fraction 70/30, Average molecular weight εw 20,000] | 60g |
| Penthaerythritol tetracrylate (Monomer) | 33g |
| Initiator for photopolymerization shown by the chemical formula 2 in FIG. 7 | 2g |
| Methoxy phenol (Inhibitor for thermal photopolymerization) | 16mg |
| Cellosolve acetate | 550g |

The above photosensitive coloured composite was dissolved into cellosolve acetate so that a concentration of 25% was reached. It was deposited on a glass substrate by using a spin coaster so that its dry film had a thickness of 2 µm, and then was dried at a temperature of 85°C for about five minutes. After cooling, the coating of a solution of PVA (poly (vinyl alcohol)) was done so that its dry film had a thickness of 1 µm to obtain a film of about 3 µm in total. The PVA which was used was a 5% solution in which the degree of saponification was 82% and the degree of polymerization was 500 and was dried, after coating, at a temperature of 85°C for about five minutes.

Then the process of exposure to light from a 2kw ultra-high-pressure mercury light was performed, through a mask, for five seconds. The process of development was made by a method of dipping into a 1% solution of sodium carbonate for one minute.

The spectrum and the chromaticity (x, y) of the colour filter thus fabricated by using CMR-green or new green are shown by FIG.1 and FIG.2, respectively. The spectrum and the chromaticity (x, y) fabricated similarly by using CMR-red or new red are shown by FIG.3 and FIG.4, respectively.

Each of the above colour filters was placed between two polarising plates and the ratio (contrast ratio) of intensity in the case when the two plates cross each other to one of the case where they are in parallel was measured under back light. Results are shown by Table.1 and FIG.5.

Table. 1

| Comparison of contrast in both cases | | | | |
|---|---|---|---|---|
| | Intensity (nit) in cross polarising plates | Intensity (nit) in parallel polarising plates | Contrast ratio | Thickness ( µm) of film |
| Polarising plate | 0.1605 | 1257 | 7830 | |
| CMR red | 0.7623 | 180.5 | 237 | 2.094 |
| New red | 0.2006 | 237.8 | 1190 | 3.248 |
| CMR green | 3.169 | 623.8 | 197 | 2.256 |
| New green | 0.1605 | 609.2 | 3800 | 3.162 |

From the above results, it is clear that a contrast ratio of about 200 for CMR-red or CMR-green, currently in use, in which the pigment of yellow is used, was remarkably improved by utilising a filter as described herein in which the reactive dye of yellow was used, to a contrast ratio of 1200 or 3800, respectively.

Further, even if the above dye/pigment-dispersed photopolymer of one of three colours is deposited on the same kind of photopolymer of another colour which has been post-baked, the dye in the post-baked photopolymer is not dissolved into the overcoating photopolymer.

As described above, it is clear that the colour filters which use pigment and reactive dye as colouring materials satisfy spectral characteristics and make high contrast display possible.

## Claims

1. A colour filter comprising a photochemically hardened composite as light-filtering substance containing an organic pigment, characterised in that said composite comprises both the organic pigment and a substance obtained by the reaction of a binder polymer in the composite with a reactive dye.

2. A colour filter as claimed in Claim 1, characterised in that said organic pigment is dianthraquinone, halo-Cu-phthalocyanine, or Cu-phthalocyanine.

3. A colour filter as claimed in Claim 1 or Claim 2, characterised in that said light-filtering substance filters red light from white light, said reactive dye is a reactive dye of primary yellow, and said organic pigment is an organic pigment of primary red.

4. A colour filter as claimed in Claim 3 characterised in that said reactive dye of primary yellow is a monoazo-compound and said organic pigment of primary red is dianthraquinone.

5. A colour filter as claimed in Claim 1 or Claim 2, characterised in that said light-filtering substance filters green light from white light, said reactive dye is a reactive dye of primary yellow, and said organic pigment is an organic pigment of primary green.

6. A colour filter as claimed in Claim 5 characterised in that said reactive dye of primary yellow is a monoazo-compound and said organic pigment of primary green is halo-Cu-phthalocyanine.

7. A method of manufacturing a colour filter having a photochemically hardened composite containing an organic pigment, the method being characterised by the steps of:

   dissolving a binder polymer and a reactive dye to form a dye-dispersed composite;
   combining the dye-dispersed composite with the organic pigment to form a photosensitive composite;
   applying said photosensitive composite to a substrate;
   heating either said dye-dispersed composite or said photosensitive composite to bond said binder polymer with said reactive dye; and
   exposing said photosensitive composite to light to obtain said photochemically hardened composite.

## Patentansprüche

1. Farbfilter, umfassend ein photochemisch gehärtetes Gemisch als lichtfilternde Substanz, das ein organisches Pigment enthält, dadurch gekennzeichnet, daß das Gemisch sowohl das organische Pigment als auch eine Substanz enthält, die durch die Reaktion eines Binderpolymers in dem Gemisch mit einem Reaktivfarbstoff erhalten wird.

2. Farbfilter nach Anspruch 1, dadurch gekennzeichnet, daß das organische Pigment Dianthrachinon, Halo-Cu-Phthalocyanin oder Cu-Phthalocyanin ist.

3. Farbfilter nach Anspruch 1 oder Anspruch 2, dadurch gekennzeichnet, daß die lichtfilternde Substanz rotes Licht aus weißem Licht ausfiltert, der Reaktivfarbstoff ein Reaktivfarbstoff von Primärgelb und das organische Pigment ein organisches Pigment von Primärrot ist.

4. Farbfilter nach Anspruch 3, dadurch gekennzeichnet, daß der Reaktivfarbstoff von Primärgelb eine Monoazo-Verbindung und das organische Pigment von Primärrot Dianthrachinon ist.

5. Farbfilter nach Anpruch 1, oder Anspruch 2, dadurch gekennzeichnet, daß die lichtfilternde Substanz grünes Licht aus weißem Licht ausfiltert, der Reaktivfarbstoff ein Reaktivfarbstoff von Primärgelb und das organische Pigment ein organisches Pigment von Primärgrün ist.

6. Farbfilter nach Anspruch 5, dadurch gekennzeichnet, daß der Reaktivfarbstoff von Primärgelb eine Monoazo-Verbindung ist und das organische Pigment von Primärgrün ein Halo-Cu-Phthalocyanin ist.

7. Verfahren zur Herstellung eines Farbfilters, das ein photochemisch gehärtetes Gemisch aufweist, das ein organisches Pigment enthält, wobei das Verfahren durch die Schritte gekennzeichnet ist des:

   Auflösens eines Binderpolymers und eines Reaktivfarbstoffes, um ein Gemisch mit einem dispergierten Farbstoff zu bilden,

   Kombinierens des Gemisches mit dem dispergierten Farbstoff mit dem organischen Pigment, um ein lichtempfindliches Gemisch zu bilden, Aufbringens des lichtempfindlichen Gemisches auf ein Substrat, Erwärmens entweder des Gemisches mit dispergiertem Farbstoff oder des lichtempfindlichen Gemisches, um das Binderpolymer mit dem Reaktivfarbstoff zu verbinden, und Belichtens des lichtempfindlichen Gemisches, um das photochemisch gehärtete Gemisch zu erhalten.

## Revendications

1. Filtre coloré comprenant une composé à durcissement photochimique en tant que substance de filtrage de la lumière contenant un pigment organique, caractérisé en ce que ledit composé comprend à la fois le pigment organique et une substance obtenue par la réaction d'un liant polymère dans le composé avec un colorant réactif.

2. Filtre coloré selon la revendication 1, caractérisé en ce que ledit pigment organique est du dianthraquinone, du halo-Cu-phthalocyanine, ou du Cu-phthalocyanine.

3. Filtre coloré selon la revendication 1 ou la revendication 2, caractérisé en ce que ladite substance de filtrage de la lumière filtre la lumière rougne à partir de la lumière blanche, ledit colorant réactif est un colorant réactif du jaune primaire, et ledit pigment organique est un pigment organique du rouge primaire.

4. Filtre coloré selon la revendication 3, caractérisé en ce que ledit colorant réactif du jaune primaire est un composé monoazo et ledit pigment organique du rouge primaire est un dianthraquinone.

5. Filtre coloré selon la revendication 1 ou la revendication 2, caractérisé en ce que ladite substance de filtrage de la lumière filtre la lumière verte à partir de la lumière blanche, ledit colorant réactif est un colorant réactif du jaune primaire, et ledit pigment organique est un pigment organique du vert primaire.

6. Filtre coloré selon la revendication 5, caractérisé en ce que ledit colorant réactif du jaune primaire est un composé monoazo et ledit pigment organique du vert primaire est du halo-Cu-phthalocyanine.

7. Procédé de fabrication d'un filtre coloré comportant un composé à durcissement photochimique contenant un pigment organique, le procédé étant caractérisé par les étapes suivantes:

   dissolution d'un liant polymère et d'un colorant réactif pour former un composé à dispersion de colorant;
   combinaison du composé à dispersion de colorant avec le pigment organique pour former un composé photosensible;
   application dudit composé photosensible à un substrat;
   chauffage dudit composé à dispersion de colorant ou dudit composé photosensible pour lier ledit liant polymère avec ledit colorant réactif; et
   exposition dudit composé photosensible à la lumière pour obtenir ledit composé durci photochimiquement.

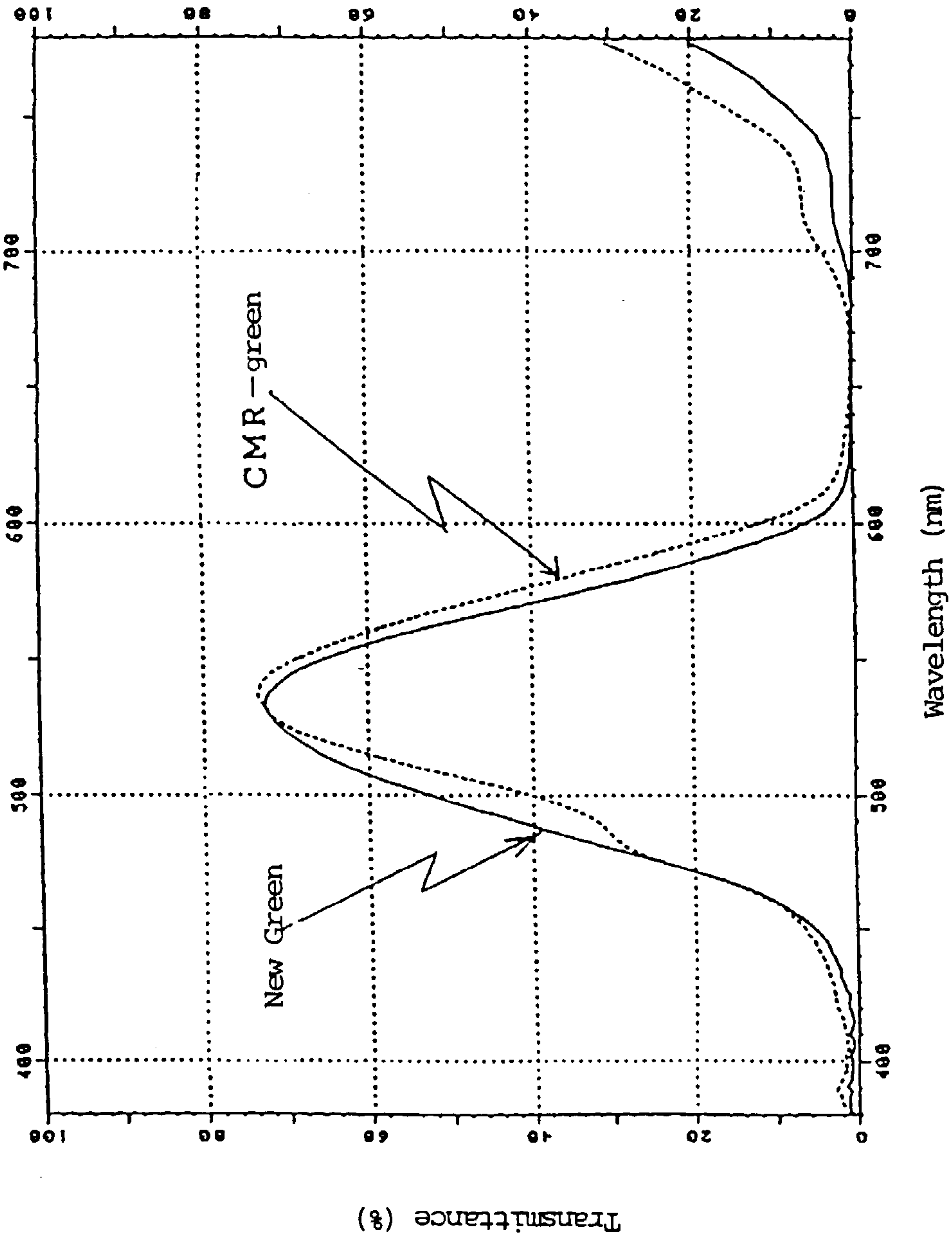
CMR-green
New Green
Wavelength (nm)
Transmittance (%)
400
500
600
700
0
20
40
60
80
100

FIG. 1

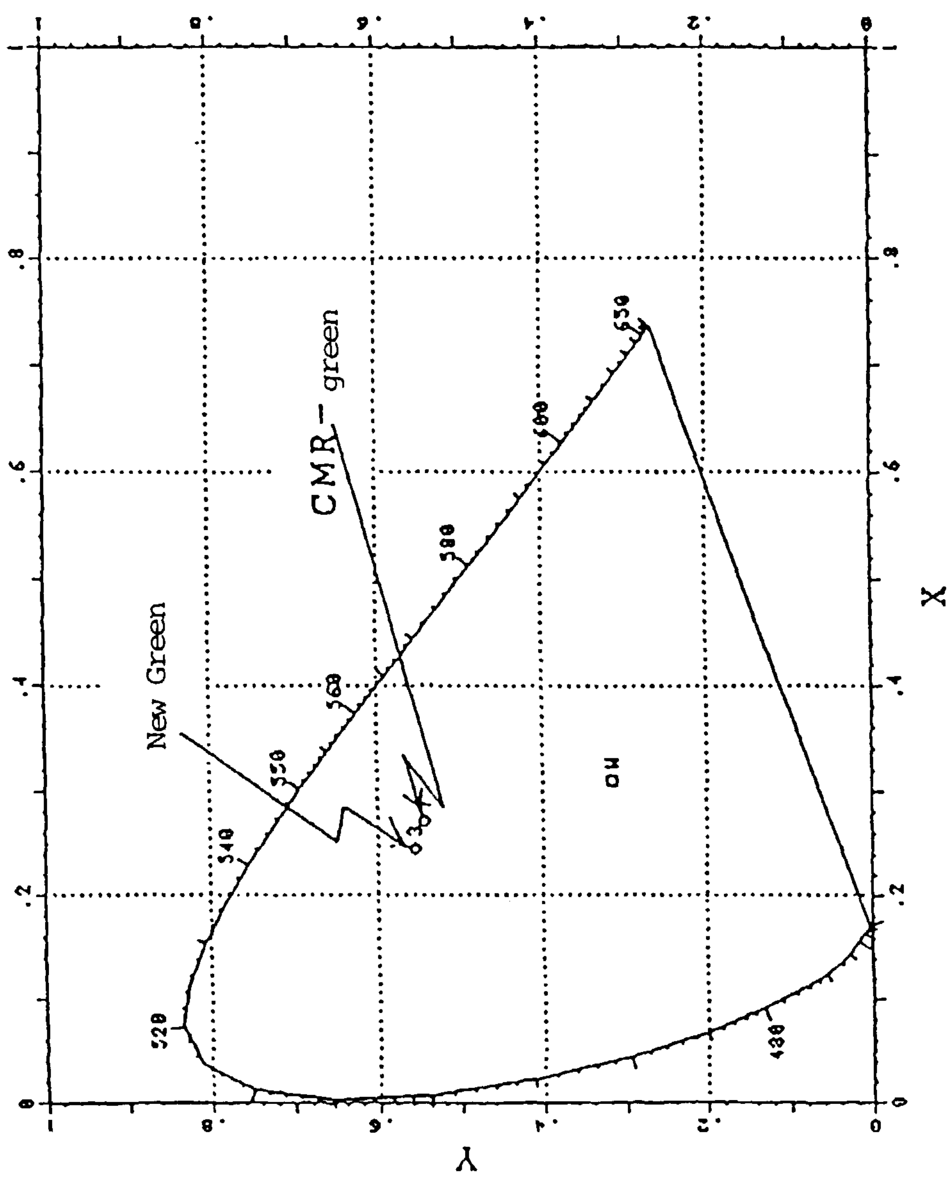


FIG. 2

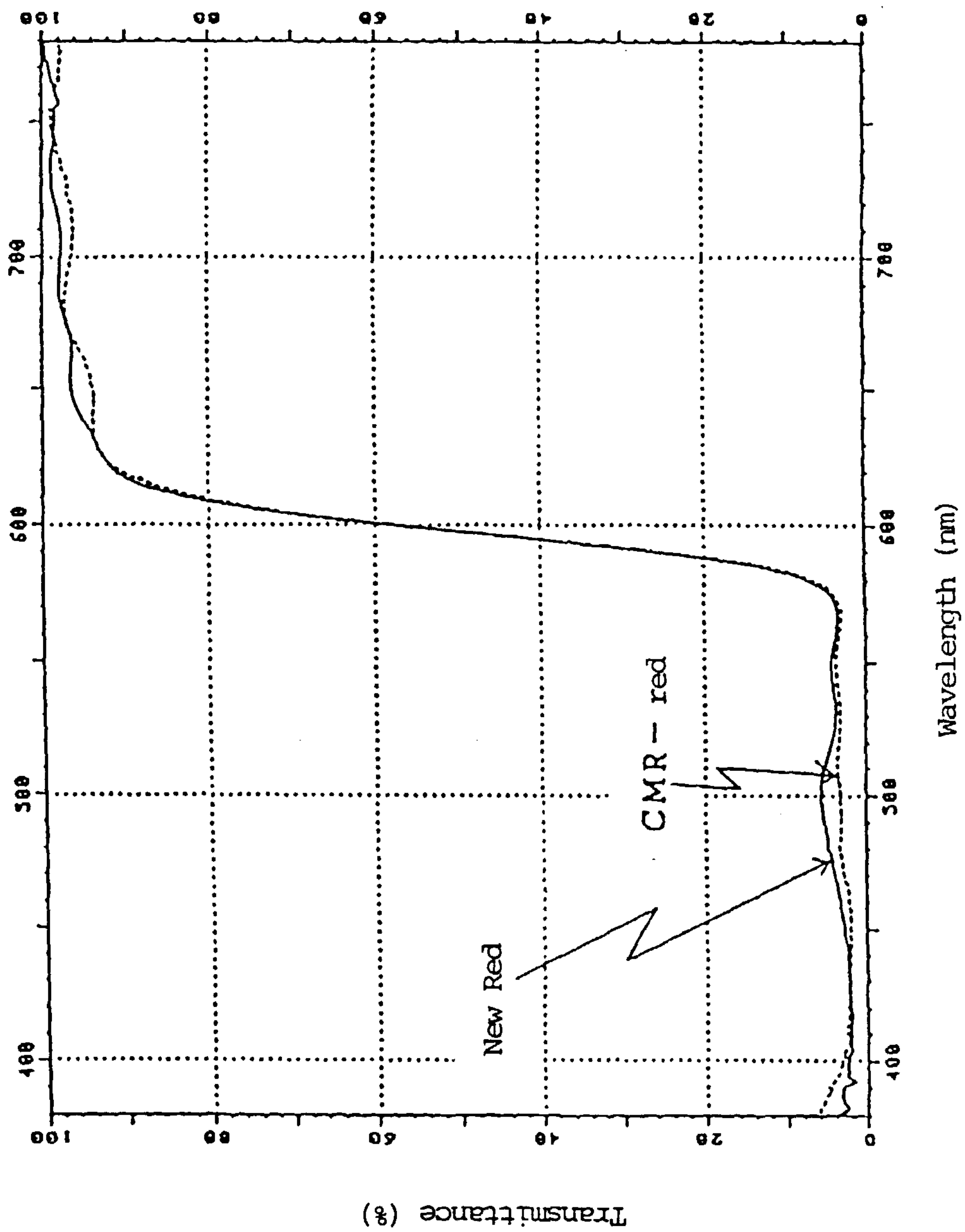
400
500
600
700
0
20
40
60
80
100
Transmittance (%)
Wavelength (nm)
New Red
CMR - red

FIG. 3

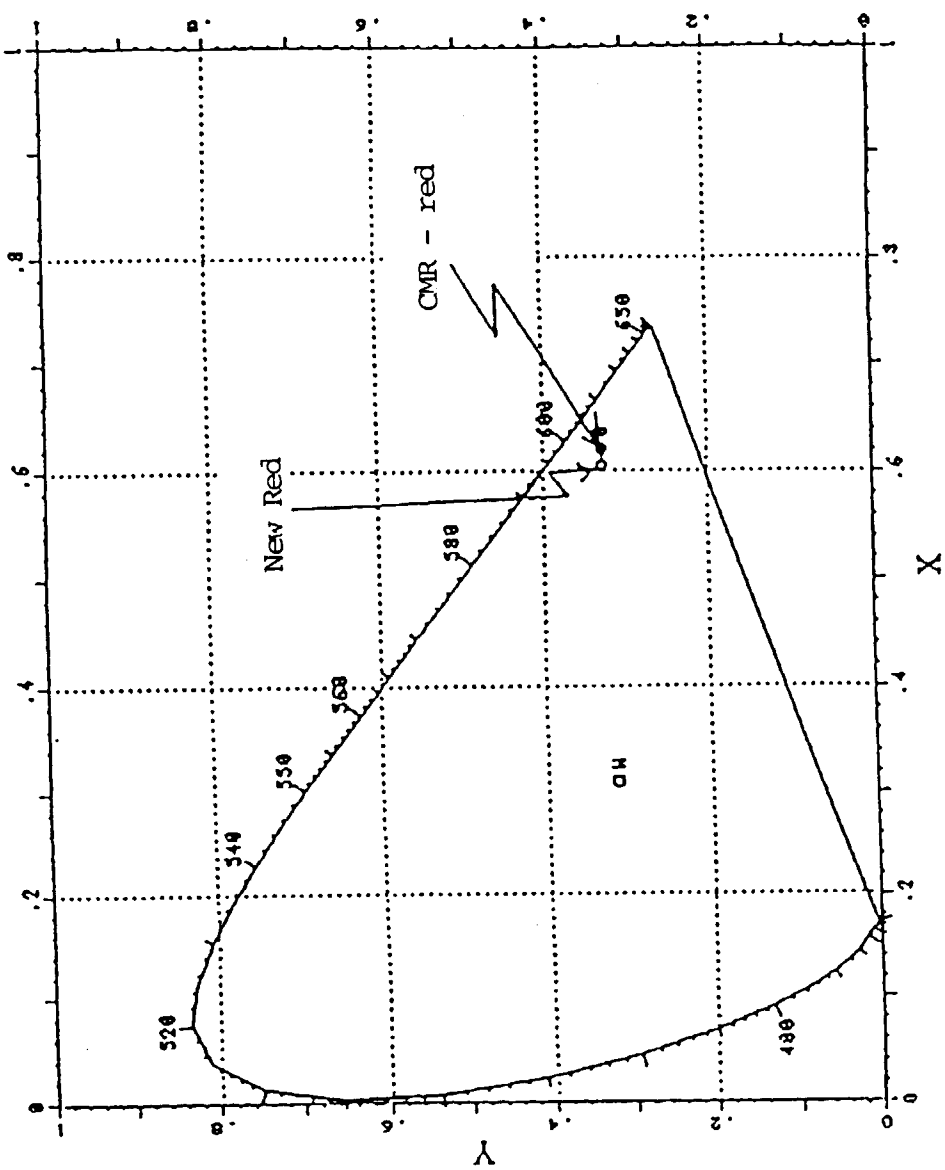


FIG. 4

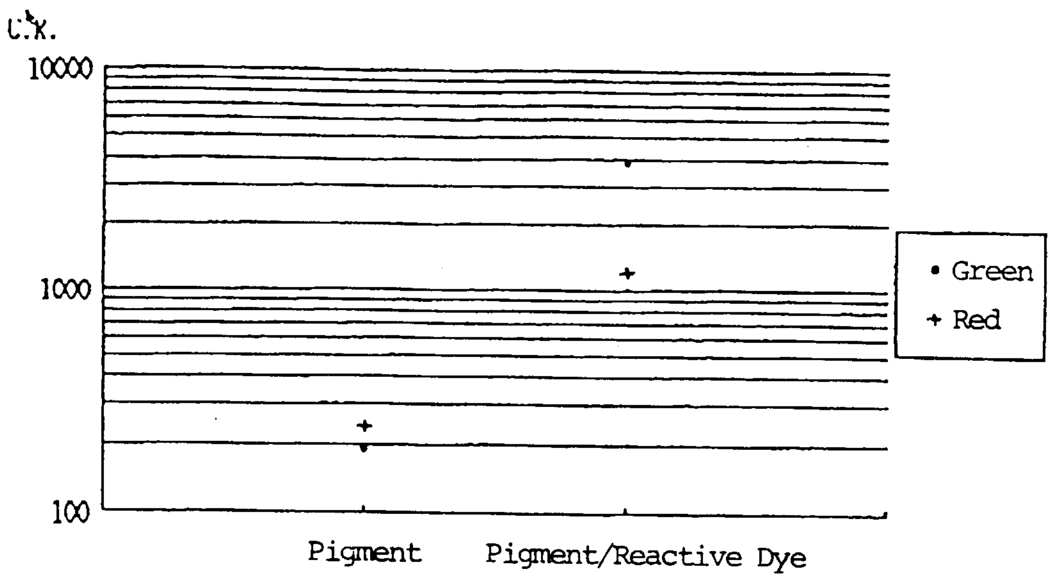


FIG. 5

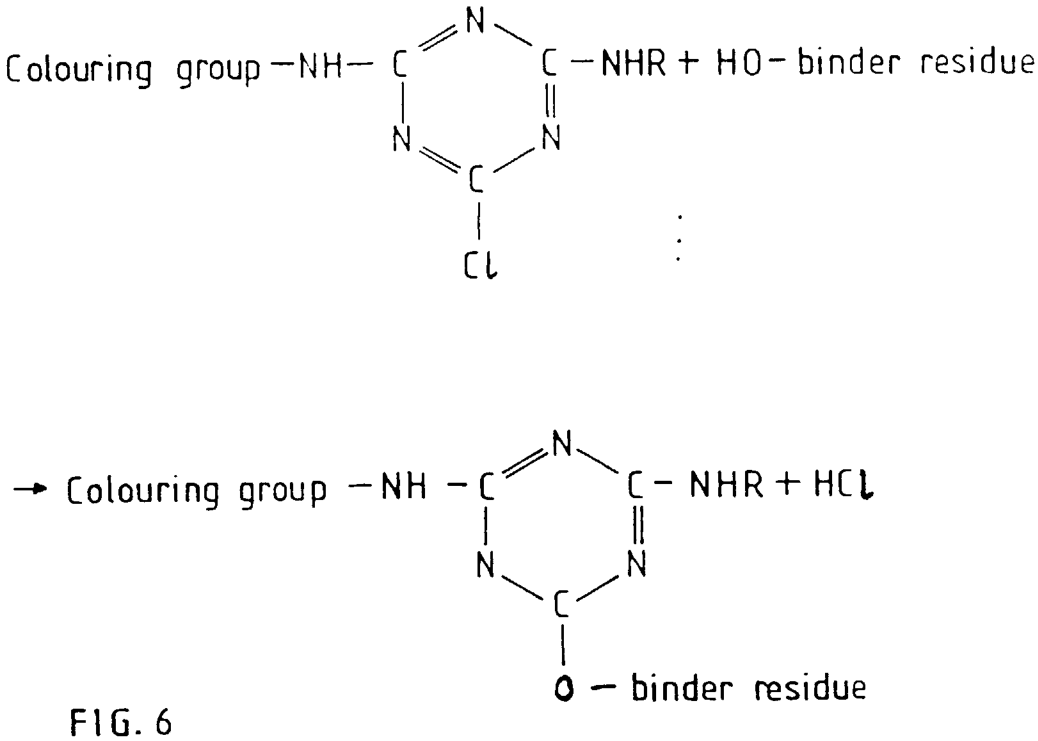

FIG. 6

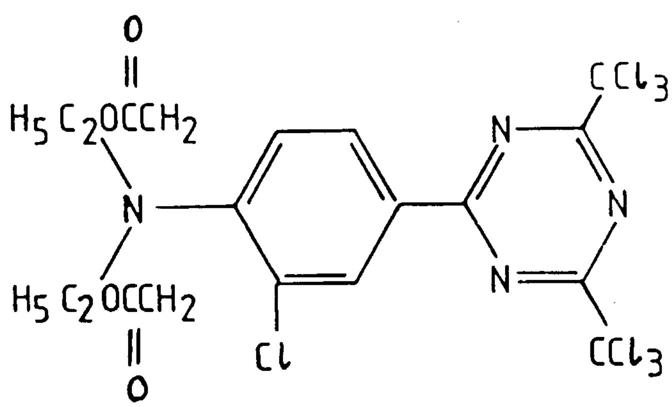

FIG. 7